# EUROPÄISCHE PATENTSCHRIFT

(11) **EP 0 898 105 B1**
(45) Veröffentlichungstag und Bekanntmachung des Hinweises auf die Patenterteilung: **15.01.2003**
(21) Anmeldenummer: 98114767.1
(22) Anmeldetag: 04.08.1998
(51) Int. Cl.: F16L 3/22, F16L 3/223, F16L 3/123, F16L 55/033

(54) **Schelle zur Befestigung von Rohren**
Clamp for fastening pipes
Collier pour la fixation de tuyaux

(30) Priorität: 16.08.1997 DE 19735509
(43) Veröffentlichungstag der Anmeldung: 24.02.1999
(73) Patentinhaber: Mecano Rapid GmbH, 69123 Heidelberg (DE)
(72) Erfinder: Demel, Otto, 69124 Heidelberg (DE); Kolb, Walter, 69214 Eppelheim (DE); Barth, Richard, Dipl.-Ing., 85053 Ingolstadt (DE); Bauder, Wolfgang, Dipl.-Ing., 85101 Lenting (DE); Seyberth, Karl, Dipl.-Ing., 91171 Greding (DE)
(74) Vertreter: Gornott, Dietmar, Dipl.-Ing.

(56) Entgegenhaltungen:
- US-A- 4 460 139
- US-A- 4 840 333
- US-A- 4 881 705

## Beschreibung

Die Erfindung betrifft eine Schelle zur Befestigung von Rohren, insbesondere in einem Kraftfahrzeug, wobei ein zwei Schenkel bildendes Einlegeteil aus weichelastischem Kunststoff mindestens eine Aufnahme für ein zu befestigendes Rohr aufweist und mit Vorsprüngen versehen ist, die mit Ausnehmungen in einer ebenfalls zwei Schenkel bildenden Klammer eine formschlüssige Verbindung bilden.

Leitungen, insbesondere Brems- und Kraftstoffleitungen, werden an Kraftfahrzeugen mit Schellen montiert, die zur Dämpfung von Schwingungen eine Gummieinlage aufweisen. Dabei werden meist mehrere bereits entsprechend den Erfordernissen gebogene Leitungen zusammen auf einer Lehre ausgelegt, mit den Schellen versehen und dann gemeinsam montiert. Dieses geschieht dadurch, daß die mit Schnellbefestigern versehenen Schellen auf Schweißbolzen an der Karosserie aufgedrückt werden.

Eine Schelle nach dem Oberbegriff ist bereits aus US 4,881,705 bekannt, bei der jedoch das Einlegeteil in eine Kunststoffklammer mit einem relativ einfachen und daher leicht lösbaren Verschluß eingelegt ist.

Aus US 4,840,333 ist die Halterung des Einlegeteils in einem gebogenen Blechstreifen bekanntgeworden, wobei jedoch das endgültige Verschließen des Blechstreifens über den Rohren gleichzeitig mit der Montage der Schelle an der Karosserie erfolgt. Ein zerstörungsfreier Austausch von Rohren ist nicht möglich.

Aufgabe der vorliegenden Erfindung ist es, eine Schelle zur Befestigung von Rohren, insbesondere in einem Kraftfahrzeug, anzugeben, bei welcher eine sichere, unter anderem gegen Steinschlag geschützte Befestigung mit geringstem Aufwand an Arbeitszeit durchgeführt werden kann.

Diese Aufgabe wird bei der erfindungsgemäßen Schelle dadurch gelöst, daß die Klammer eine federnde Metallklammer ist, wobei der eine Schenkel teilweise als Schnellbefestiger mit mehreren Federzungen ausgebildet ist, daß die Enden beider Schenkel als Verschluß ausgebildet sind, der durch Zusammendrücken der Schenkel der Metallklammer entgegen der Federkraft einrastet, daß die Enden der Schenkel der Metallklammer jeweils um im wesentlichen 90° aufeinanderzu gebogen sind und derart den Verschluß bilden, daß in einem der Schenkel eine Ausnehmung ist, in die ein Rasthaken des anderen Schenkels im geschlossenen Zustand eingreift, und daß ein über die Ausnehmung herausragender Teil des einen Schenkels unter Bildung einer weiteren Ausnehmung und eines Biegeradius um etwas mehr als 180° zurückgebogen ist, wobei der zurückgebogene Teil eine Führung für den Rasthaken beim Schließen bildet.

Dabei ist vorzugsweise vorgesehen, daß die Führung für den Rasthaken soweit zurückgebogen ist, daß die Führung durch den Rasthaken beim Schließvorgang elastisch verformt wird.

Mit der erfindungsgemäßen Schelle ist eine sichere Halterung von Rohren in Kraftfahrzeugen möglich. Während der Montage können jeweils mit einem einfachen Handgriff die kompletten Schellen auf die Rohre aufgesetzt und geschlossen werden. Dabei ist kein Werkzeug und lediglich ein geringer Andruck erforderlich.

Die erfindungsgemäße Schelle weist ferner den Vorteil auf, daß durch mechanische Belastungen, beispielsweise durch Steinschlag, keine Verschwenkung der Schenkel gegeneinander auftreten kann, bei der sich der Verschluß öffnen könnte.

Mit der Erfindung wird außerdem eine sichere Führung des Rasthakens beim Schließen der Schelle und ein zusätzlicher Schutz dagegen gewährleistet, daß sich der Verschluß durch Verformung des Rasthakens oder der Schenkel gegeneinander in deren Längsrichtung öffnet. Dennoch läßt sich die Schelle öffnen - beispielsweise bei Reparaturen.

Eine Weiterbildung der erfindungsgemäßen Schelle besteht darin, daß der Rasthaken von einer von dem Ende des anderen Schenkels wegweisenden in Richtung auf die Ausnehmung des einen Schenkels herausgebogenen Zunge gebildet wird.

Bei dieser Weiterbildung wird eine besonders stabile Verbindung dadurch erreicht, daß die Zunge sowohl an ihrer Basis als auch seitlich mit dem Ende des Schenkels verbunden ist, wobei die die Seiten der Zunge und den Schenkel verbindenden spitzwinkligen Zwickel je eine Hohlkehle aufweisen zur Aufnahme der Kante der Ausnehmung des einen Schenkels in geschlossenem Zustand.

Durch die Vormontage des gesamten Rohrbündels und anschließendes Aufstecken der Schellen auf die Schweißbolzen ist ein Toleranzausgleich zwischen den Abständen der auf den Rohren befindlichen Schellen und den Abständen der Schweißbolzen an der Karosserie notwendig. Dies ist gemäß einer Weiterbildung der erfindungsgemäßen Schelle dadurch möglich, daß der weichelastische Kunststoff ein spritzbarer Kunststoff mit Gleitmittel ist.

Ein Ausführungsbeispiel der Erfindung ist in der Zeichnung anhand mehrerer Figuren dargestellt und in der nachfolgenden Beschreibung näher erläutert. Es zeigt:
- Fig. 1: bis Fig. 3 je eine Ansicht der geöffneten Schelle, die zur Befestigung von drei Rohren ausgebildet ist,
- Fig. 4: eine perspektivische Ansicht des Ausführungsbeispiels und
- Fig. 5: ein Detail des Ausführungsbeispiels.

Gleiche Teile sind in den Figuren mit gleichen Bezugszeichen versehen.

Eine vorzugsweise aus rostfreiem Stahl bestehende Metallklammer 1 ist derart gebogen, daß sie zwei Schenkel 2, 3 bildet, die jeweils durch Sicken 4, 5, 6, 7, 8, 9 versteift sind. An einer Biegestelle 10, die durch ein ausgestanztes Fenster 10' geschwächt ist, befinden sich keine Sicken. Die Schenkel 2, 3 der unbelasteten und unverschlossenen Metallklammer 1 bilden einen Winkel von etwa 70°.

Innerhalb der Metallklammer befindet sich ein Einlegeteil aus elastischem Kunststoff, das ebenfalls zwei Schenkel 11, 12 aufweist, die an einer Biegestelle 13 miteinander verbunden sind.

Das Einlegeteil ist mit Vorsprüngen 14, 15, 16 versehen, die durch entsprechende Ausnehmungen hindurchragen und somit eine formschlüssige Verbindung zwischen dem Einlegeteil und der Metallklammer 1 bilden. Von den Ausnehmungen sind in den Figuren lediglich eine Ausnehmung 18 sichtbar.

In den Schenkeln 11, 12 des Einlegeteils sind Aufnahmen 19, 20, 21 für die zu befestigenden Rohre vorgesehen.

Mit einem an sich bekannten mit dem Schenkel 2 einstückigen Schnellbefestiger 22 kann die Schelle auf einen nicht dargestellten Schweißbolzen aufgesteckt werden. Dazu sind in dem anderen Schenkel 3 und in den Schenkeln 11, 12 des Einlegeteils Öffnungen vorgesehen, von denen nur die Öffnungen 24, 25 im Einlegeteil sichtbar sind.

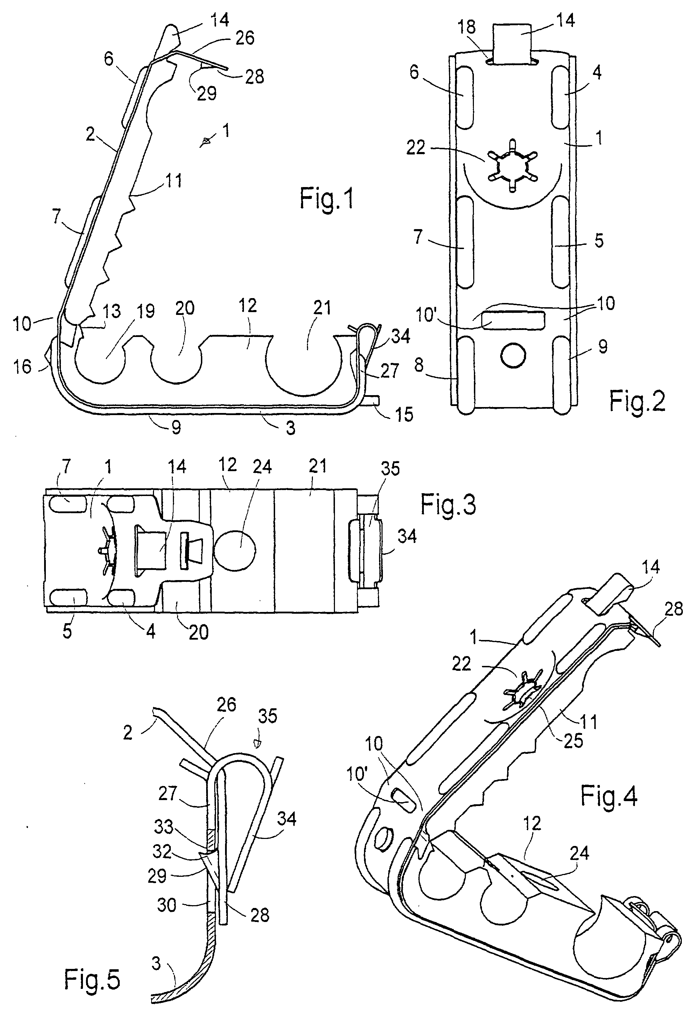

In den Endbereichen sind die Schenkel 2, 3 der Metallklammer 1 etwa senkrecht aufeinanderzu gebogen. Der Endbereich 26 des Schenkels 2 ist wesentlich schmäler als der Schenkel 2 selbst und bildet einen Rasthaken 28, der in Fig. 5 vergrößert dargestellt ist. Dieser greift mit einer herausgebogenen Zunge 29 in eine Öffnung 30 im verschlossenen Zustand ein. Die Zunge 29 des Rasthakens 28 ist nicht nach einem U-förmigen Schnitt herausgebogen, sondern unter Beibehaltung der seitlichen Verbindungen zu dem geraden Teil des Rasthakens 28 geprägt, wobei in diese seitlichen Verbindungen Vertiefungen 32 eingebracht sind, in die im geschlossenen Zustand die Kante 33 der Öffnung 30 (Fig. 5) eingreift. Damit wird ein stabiles Einrasten an einer genau festgelegten Stellung der Schenkel 2, 3 zueinander gewährleistet, ohne die Gefahr, daß sich die Zunge 29 beim Schließvorgang oder in der Schließstellung unkontrolliert verbiegt.

Über den senkrecht abgebogenen Endbereich 27 hinausgehend ist der Endbereich bei 34 zurückgebogen in einem Winkel von mehr als 180°. Dieser Endbereich bildet somit eine Führung für den Rasthaken 28, der beim Schließen durch eine Öffnung im gebogenen Teil 35 eingeführt wird. Im geschlossenen Zustand bildet der Bereich 34 des Schenkels eine zusätzliche Sicherung des Rasthakens 28. Schließlich schützt er den Rasthaken 28 vor Verformungen, beispielsweise durch Steinschlag.

Das Einlegeteil besteht vorzugsweise aus einem spritzbaren Kunststoff, insbesondere einem thermoplastischen Elastomer, mit einem Gleitmittel. Ein solcher Kunststoff wird beispielsweise unter der Bezeichnung MEGOL IA 60 EUG vertrieben.

## Patentansprüche

1. Schelle zur Befestigung von Rohren, insbesondere in einem Kraftfahrzeug, wobei ein zwei Schenkel (11, 12) bildendes Einlegeteil aus weichelastischem Kunststoff mindestens eine Aufnahme für ein zu befestigendes Rohr (19 bis 21) aufweist und mit Vorsprüngen (14 bis 16) versehen ist, die mit Ausnehmungen (17, 18) in einer ebenfalls zwei Schenkel (2, 3) bildenden Klammer (1) eine formschlüssige Verbindung bilden, **dadurch gekennzeichnet, daß** die Klammer eine federnde Metallklammer (1) ist, wobei der eine Schenkel (3) teilweise als Schnellbefestiger (22) mit mehreren Federzungen ausgebildet ist, daß die Enden beider Schenkel (2, 3) als Verschluß (26 bis 33) ausgebildet sind, der durch Zusammendrücken der Schenkel (2, 3) der Metallklammer (1) entgegen der Federkraft einrastet, daß die Enden der Schenkel (2, 3) der Metallklammer (1) jeweils um im wesentlichen 90° aufeinanderzu gebogen sind und derart den Verschluß (26 bis 33) bilden, daß in einem der Schenkel (3) eine Ausnehmung (30) ist, in die ein Rasthaken (28) des anderen Schenkels (2) im geschlossenen Zustand eingreift, und daß ein über die Ausnehmung (30) herausragender Teil des einen Schenkels (3) unter Bildung einer weiteren Ausnehmung (35) und eines Biegeradius um etwas mehr als 180° zurückgebogen ist, wobei der zurückgebogene Teil eine Führung (34) für den Rasthaken (28) beim Schließen bildet.

2. Schelle nach Anspruch 1, **dadurch gekennzeichnet, daß** die Führung (34) für den Rasthaken (28) soweit zurückgebogen ist, daß die Führung (34) durch den Rasthaken (28) beim Schließvorgang elastisch verformt wird.

3. Schelle nach einem der Ansprüche 1 oder 2, **dadurch gekennzeichnet, daß** der Rasthaken (28) von einer von dem Ende des anderen Schenkels (2) wegweisenden in Richtung auf die Ausnehmung (30) des einen Schenkels (3) herausgebogenen Zunge (29) gebildet wird.

4. Schelle nach Anspruch 3, **dadurch gekennzeichnet, daß** die Zunge (29) sowohl an ihrer Basis als auch seitlich mit dem Ende des Schenkels (2) verbunden ist, wobei die die Seiten der Zunge (29) und den Schenkel (2) verbindenden spitzwinkligen Zwickel je eine Hohlkehle (33) aufweisen zur Aufnahme der Kante (32) der Ausnehmung (30) des einen Schenkels (3) in geschlossenem Zustand.

5. Schelle nach einem der vorhergehenden Ansprüche, **dadurch gekennzeichnet, daß** der weichelastische Kunststoff ein spritzbarer Kunststoff mit Gleitmittel ist.

## Claims

1. A clamp for fastening pipes, particularly in a motor vehicle, wherein an insert which is made of a flexible plastics material and which forms two limbs (11, 12) comprises at least one receiver for a pipe (19 to 21) to be fastened, and is provided with projections (14 to 16) which form a positive connection with apertures (17, 18) in a clasp (1) which also forms two limbs (2, 3), **characterised in that** the clasp is a springy metal clasp (1), wherein one limb (3) is formed in part as a rapid fastener (22) comprising a plurality of flexible tongues, that the ends of both limbs (2, 3) are formed as a closure (26 to 33) which locks into place by pressing the limbs (2, 3) of the metal clasp (1) together against the spring force, that the ends of the limbs (2, 3) of the metal clasp (1) are each bent towards each other by substantially 90 ° and in this manner form the closure (26 to 33), that in one of the limbs (3) there is an aperture (30) into which a locking hook (28) on the other limb (2) fits in the closed state, and that a part of one limb (3) which protrudes beyond the aperture (30) is bent back by somewhat more than 180° with the formation of a further aperture (35) and a bending radius, wherein the bent-back part forms a guide (34) for the locking hook (28) on closure.

2. A clamp according to claim 1, **characterised in that** the guide (34) for the locking hook (28) is bent back to an extent such that the guide (34) is elastically deformed by the locking hook (28) during the closure operation.

3. A clamp according to either one of claims 1 or 2, **characterised in that** the locking hook (28) is formed by a bent-out tongue (29) which points away from the end of one limb (2) towards the aperture (30) in the other limb (3).

4. A clamp according to claim 3, **characterised in that** of the tongue (29) is joined both at its base and at its sides to the end of the limb (2), wherein the acute-angled gussets which join the sides of the tongue (29) and the limb (2) each comprise a throat (33) for receiving the edge (32) of the aperture (30) of the other limb (3) in the closed state.

5. A clamp according to any one of the preceding claims, **characterised in that** the flexible plastics material is an injection-mouldable plastics material which comprises an internal lubricant.

## Revendications

1. Bride pour la fixation de tuyaux, en particulier sur un véhicule automobile, au sein de laquelle une partie d'insertion à base de plastique élastique et souple formant deux branches (11, 12) présente au moins un logement pour un tuyau (19 à 21) à fixer et est pourvue de parties saillantes (14 à 16), qui forment une liaison mécanique avec des évidements (17, 18) dans une pince (1) formant également deux branches (2, 3), **caractérisée en ce que** la pince est une pince métallique (1) montée de façon élastique, une branche (3) étant conçue en partie sous la forme d'assemblage rapide (22) avec plusieurs lames de ressort, **en ce que** les extrémités des deux branches (2, 3) sont conçues comme une fermeture (26 à 33), qui s'engage dans le sens contraire à la force de ressort par compression des branches (2, 3) de la pince métallique (1), **en ce que** les extrémités des branches (2, 3) de la pince métallique (1) sont courbées chacune de sensiblement 90° l'une par rapport à l'autre et forment la fermeture (26 à 33) de telle façon que, dans l'une des branches (3), il y a un évidement (30) dans lequel s'engage un crochet d'arrêt (28) de l'autre branche (2) dans l'état fermé, et **en ce qu'**une partie d'une branche (3), qui dépasse de l'évidement (30) à l'extérieur, est recourbée en arrière d'un peu plus de 180° en formant un autre évidement (35) et un rayon de courbure, la partie recourbée en arrière formant un guide (34) pour le crochet d'arrêt (28) lors de la fermeture.

2. Bride selon la revendication 1, **caractérisée en ce que** le guide (34) pour le crochet d'arrêt (28) est recourbé en arrière dans la mesure où le guide (34) est déformé élastiquement par le crochet d'arrêt (28) lors de l'opération de fermeture.

3. Bride selon l'une quelconque des revendications 1 ou 2, **caractérisée en ce que** le crochet d'arrêt (28) est formé d'une lame (29), qui part de l'extrémité de l'autre branche (2) et est plié à l'extérieur en direction de l'évidement (30) d'une branche (3).

4. Bride selon la revendication 3, **caractérisée en ce que** la lame (29) est reliée à l'extrémité de la branche (2) aussi bien sur sa base que sur le côté, moyennant quoi les goussets à angle aigu reliant les côtés de la lame (29) et la branche (2) présentent chacun une gorge creuse (33) pour le logement de l'arête (32) de l'évidement (30) d'une branche (3) dans l'état fermé.

5. Bride selon l'une quelconque des revendications précédentes, **caractérisée en ce que** le plastique souple et élastique est un plastique moulable par injection avec un lubrifiant.
